Europäisches Patentamt

European Patent Office

Office européen des brevets

(19)

(11) Publication number: **0 073 113**

**A1**

(12) # EUROPEAN PATENT APPLICATION

(21) Application number: **82304092.8**

(22) Date of filing: **03.08.82**

(51) Int. Cl.³: **G 06 K 5/00**
**G 06 K 17/00**

(30) Priority: **10.08.81 US 291543**

(43) Date of publication of application:
**02.03.83 Bulletin 83/9**

(84) Designated Contracting States:
**DE FR GB**

(71) Applicant: **NCR CANADA LTD - NCR CANADA LTEE**
**6865 Century Avenue**
**Mississauga Ontario, L5N 2E2(CA)**

(72) Inventor: **Rushby, Robert John**
**608 Glen Forrest**
**Waterloo Ontario, N2L 4J8(CA)**

(74) Representative: **Robinson, Robert George**
**International Patent Department NCR Limited 206**
**Marylebone Road**
**London NW1 6LY(GB)**

(54) Document processing system.

(57) In a document processing system a printer (22) prints a document (14) identification number in the form of a bar code including a sequential portion in the form of a number identifying the particular document (14) and a non-sequential portion which may contain common information. The sequential portion is formed by a number provided by a pseudo-random number generator. The pseudo-random identifying numbers of documents (14) being processed are stored in a storage file (106). When the bar code is read, erroneous read-outs are corrected if possible in an error detect and correct circuit (102). If the read-out number is not correctable it is compared with numbers from a region of numbers in the storage file (106) including the location of the expected number. A comparison is regarded as positive is the read-out digits correspond with a compared number from the storage file (106) to within a predetermined threshold. The system has improved document misread and reject performance and hence a high reliability.

FIG. 3

**0073113**

## DOCUMENT PROCESSING SYSTEM

This invention relates to systems for processing documents, of the kind including printing means adapted to print coded symbols on said documents, printing control means coupled to said printing means, and reading means adapted to read the printed coded symbols and provide corresponding read-out representations.

The invention also relates to a method for processing documents.

One problem associated with systems for processing documents, of the kind specified, is that an error may occur in the reading operation such that the reading means provides signals which are detected as not corresponding to a valid symbol. The error may result for example from variables introduced by the reader in producing the electrical data or by fluctuations in the speed of the document feed mechanism. Such an error may lead to the rejection of the associated document and hence reduce the reliability of the document processing system.

A system of the kind specified is known from European patent application No. 80304733 in the name of the present applicant. According to the known system the printed coded symbol includes a plurality of message bits and a plurality of check bits, in a BCH (Bose-Chaudhury-Hocquenghem) code capable of correcting up to two errors. This known system thus has increased reliability since those erroneous read-outs which are capable of being corrected need not lead to rejection of the associated documents. However the reliability of this known system is still limited.

It is an object of the present invention to provide a system for processing documents, of the kind specified, having an increased reliability.

Therefore, according to the present invention, there is provided a system for processing documents, of the kind specified, characterized in that said printing control means includes pseudo-random number generating means adapted to control the printing on said documents of said coded symbols to include respective representations of pseudo-random numbers provided by said generating means, and further characterized by storage means arranged to store representations of the pseudo-random numbers corresponding to the printed coded symbol representations of documents being processed, and comparison means adapted to compare said read-out representations with a plurality of the representations stored in said storage means.

It will be appreciated that in a system according to the immediately preceding paragraph improved reliability is achieved since where an uncorrectable error is detected, the comparison means is capable of reducing the number of document rejects by rejecting only documents associated with read-out representations which do not match a stored representation at least within some threshold amount. It is found that the use of numbers from a pseudo-random sequence produces less correlation with other numbers in a range than would be the case if for example a pure binary code were utilized.

According to another aspect of the present invention, there is provided a method for processing documents, including the steps of printing coded symbols on the documents, and reading the printed coded symbols to provide read-out representations, characterized by the steps of providing a pseudo-random number generator, printing said symbols to include representations of pseudo-random numbers provided by said generator, storing in a storage file representations of the pseudo-random numbers corresponding to the printed coded symbol representations of documents being processed, and comparing the read-out representations with a plurality of the representations provided in said storage file.

One embodiment of the invention will now be described by way of example with reference to the accompanying drawings, in which:-

Fig. 1 is a general block diagram showing an embodiment in which the method of the present invention may be used;

Fig. 2 is a chart of a simple binary sequence and a pseudo-random sequence;

Fig. 3 is a block diagram showing an operational block diagram of a system using the present invention;

Fig. 4 is a chart showing correlation methods for both pseudo-random and simple binary sequences; and

Fig. 5 is a chart showing error tolerances for both pseudo-random and simple binary sequences.

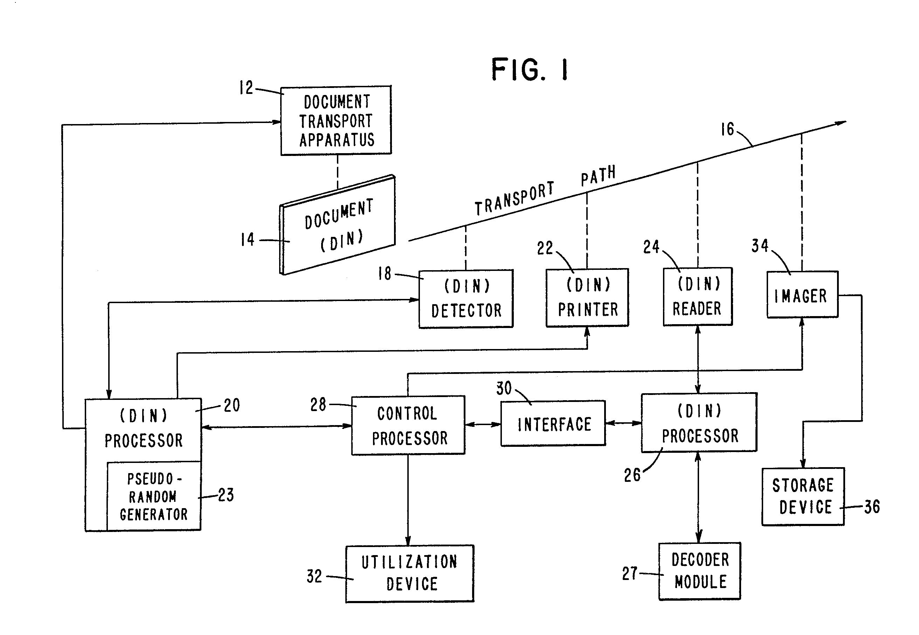

Fig. 1 is a general schematic block diagram showing a document processing system in which the method of the present invention may be used.

The document processing system shown in Fig. 1 is part of a banking system in which certain financial documents, such as checks and deposit slips, are processed electronically. The system performs the general functions of assigning a document identification number, hereinafter referred to as a DIN, to a document, checking on the accuracy of the DIN as printed on the document, and forming a digitized image of the document being processed.

With this general background in mind, the processing system shown in Fig. 1 includes a conventional document transport apparatus 12 (such as a check transport mechanism) for moving a document 14 along a transport path 16. As document 14 is moved along path 16, a DIN detector 18 is utilized to check for the presence of a DIN which may have been assigned previously; this is due to the fact that some documents such as checks, which are initially returned, for example, due to insufficient funds in the associated account, may be re-entered into the system to be reprocessed. Each document entered into the system should have only one DIN assigned to it; consequently, DIN detector 18 avoids the assignment of two DINs to one document.

Assuming that there is no DIN on document 14, DIN detector 18 reports this fact to a DIN processor 20, which in turn enables a DIN printer 22 to print a particular unique DIN on document 14 when document 14 (moved along transport path 16 by document transport apparatus 12) is in printing relationship with DIN printer 22. DIN printer 22 may be any conventional printer, such as an ink jet printer, and the DIN may be printed in any convenient location on document 14.

After DIN printer 22 prints a DIN on document 14, document 14 is transported into a reading relationship with a DIN reader 24 which reads or verifies the DIN which has been printed on the document. The output of DIN reader 24 is transmitted to a processor 26 which is operatively interfaced with a decoder module 27 which detects errors in the DIN. Processor 26 is also coupled to a control processor 28 via an interface 30; control processor 28 is also coupled to a utilization device 32 for use in another part of the overall processing system.

After document 14 is read by DIN reader 24, it is brought into proximity with a conventional imager 34, which forms a digitized image of document 14, and transmits this image to a storage device 36. After document 14 has been transported past imager 34 along transport path 16, it is deposited into a receptacle (not shown).

The method of the present invention is based upon the generation of a particular DIN code that is comprised of two distinct sections: a sequential portion and a non-sequential portion. The sequential portion of the DIN forces document uniqueness, while the non-sequential portion may carry document information common to a plurality of documents, such as date, document type, bank identification information, etc. These two sections are combined to form a single DIN. The relative position of the distinct sections with respect to each other is not important; however, the sequential portion must be long enough to ensure that the probability of two documents existing in a batch file having the same DIN due to the sequence number recycling is insignificant.

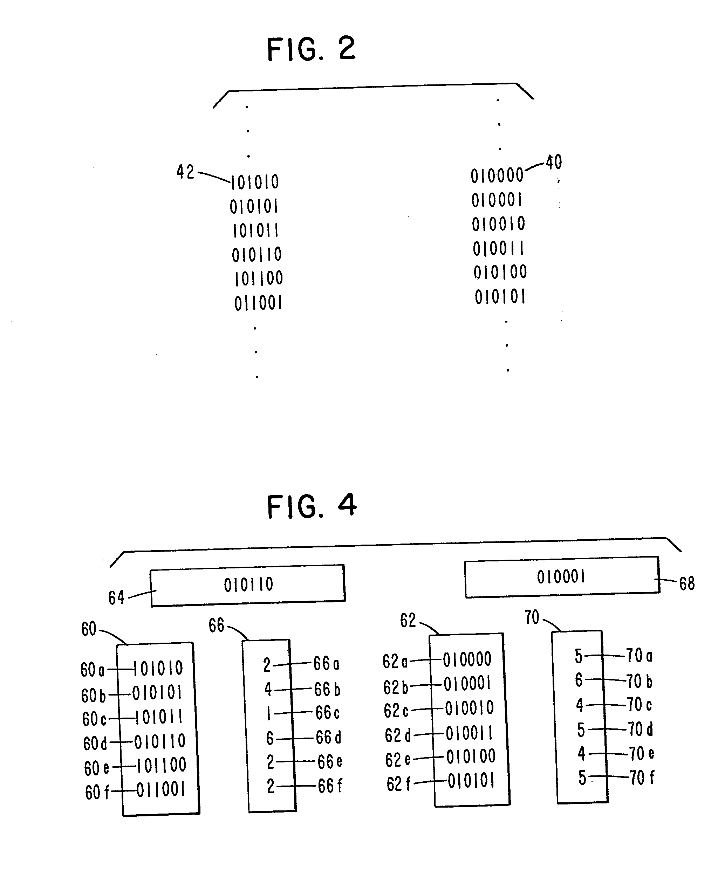

The DIN code employed in the present invention uses a pseudo-random counting sequence rather than a simple binary counting sequence when generating the sequential portion of the DIN. Fig. 2 shows a chart containing a portion of a binary sequence 40 and of a pseudo-random sequence 42. A pseudo-random sequence is one which is generated using a mathematical process which is repeatable, but in which all the numbers produced have apparently all the statistical properties of random digits. The pseudo-random sequence has several properties which can be useful in the processing of documents: an N-bit pseudo-random sequence has $2^N-1$ different states before it repeats, allowing for a significant range of non-repetitive numbers; a pseudo-random sequence is easily generated in either hardware or software; and, within any given range of sequential numbers, a pseudo-random number generally correlates less with other numbers in the range than in a binary sequence.

In the system shown in Fig. 1, processor 20 supplies the pseudo-random bar code information to printer 22 for use in encoding the documents. A pseudo-random number generator 23 is employed by processor 20 to generate the sequences which comprise the sequential portion of the DIN. An example of a circuit for generating pseudo-random numbers may be found in U.S.

Patent No. 3,838,259, issued to Dieter Kortenhaus.

DIN-based document processing within financial institutions begins on the transaction level;  a transaction consists of the group of documents which a customer presents to a teller to complete a single business transaction, including checks, deposit slips, and cash out slips.   All documents within the transaction are encoded with a unique DIN.   A number of transactions are then assembled together to form a batch.   For example, all transactions that a teller has accumulated over the course of a business day may be combined to form a batch.   Each batch is always in balance;  that is, the amount of credits equals the amount of debits.

As each batch is accumulated at the financial institution, a data file is generated corresponding to the batch.   This data file is created by entering significant data, such as DIN, amount, and account number, from each document into a memory means.   Therefore, DIN-based document processing within a bank is file-based processing;  the data files contain the pertinent information for all documents within the system.   The data files associated with the documents flow with the documents once a DIN has been printed on each document contained in the file.   Thus, each subsequent time an identifiable batch of documents which have been DIN encoded is to be read, a data file may be generated which contains the DINs of all the documents expected in that file.   This data file may be arranged into the expected arrival sequence of all the documents in the file, and it contains all necessary information regarding what is to be done with the document  at each processing step.

Thus, each DIN that is read during document processing may be matched against a data file of ordered, expected DINs.   Therefore, in a manner which is similar to conventional MICR matching techniques, some error tolerance may exist with the data file by assuming that a corrupted DIN read from a document will still match or correlate to an expected DIN by some threshold amount, or by restricting any DIN matching to a file window, searching for a match in a restricted area of the ordered file in which the document is expected to be.    In cases where documents are known to be out of order, this restricted window could be relaxed.

Thus, the DIN read performance is comparable to DIN matching, or correlation, performance.    A misread DIN bar, even if it is uncorrectable, is of no consequence within a processing system using the present invention if the corrupted DIN that is read from a document matches the proper DIN identity in the data file better than any other identity by some threshold amount.    Therefore, a DIN reject will occur only when a DIN read from a document does not adequately correlate above a threshold value to any DINs in the data file, or if more than one DIN in the data file correlates better than the threshold with the read DIN.    A DIN misread will occur only when a DIN read from a document correlates with an incorrect DIN in the data file better than the correct expected DIN and also correlates above the threshold.

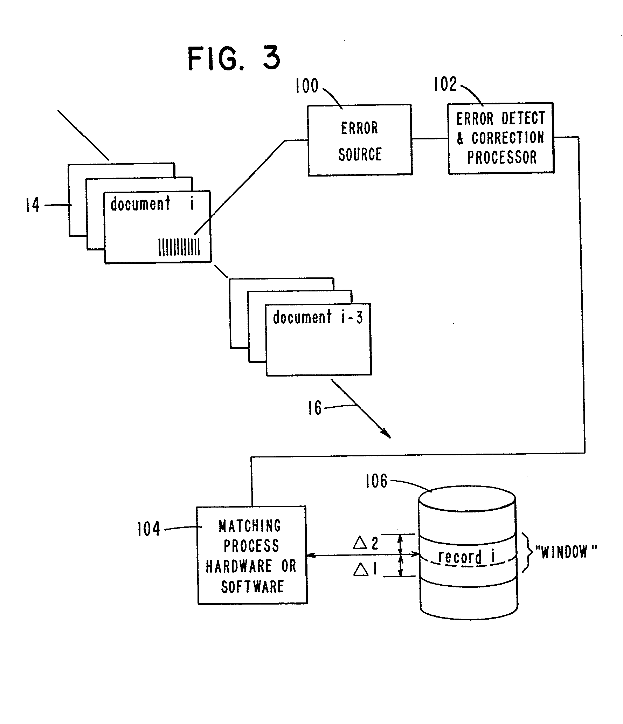

Referring now to Fig. 3, there is shown a block diagram of one embodiment of a system in which the present invention may be used.    A plurality of documents 14 are shown as they are transported along transport path 16 in the manner displayed in Fig. 1.    A DIN containing a pseudo-random sequence number is read from each document 14 by a DIN reader (not shown).    Occasionally, the DIN read from a document will be corrupted by an error source 100, which may be use to several factors; poor bar code printing, unsmooth document travel past the DIN reader, etc.    The corrupted or noisy DIN is first subjected to a conventional error detection and correction processor 102, which can correct up to two erroneous bits in the present embodiment.  If the processor 102 determines that the noisy DIN is uncorrectable using conventional techniques, the noisy DIN, in uncorrected form, is transmitted to the DIN matching processor 104.

Processor 104 accesses data file 106 to locate information stored for the document in question.  In the present embodiment, document i is the document which is anticipated by the pseudo-random sequential portion of the DIN.  Processor 104 then searches the ordered data file for DINs within a file window about this document. This file window consists of a region within the data file covering documents a predetermined number before and after the expected document in the ordered sequence. Thus, the window file in the present embodiment covers documents $i-\triangle$ to $i+\triangle$.  Also, it is not necessary that the file window be symmetrical about the expected document;  for example, different values $\triangle_1$ and $\triangle_2$ may be used.

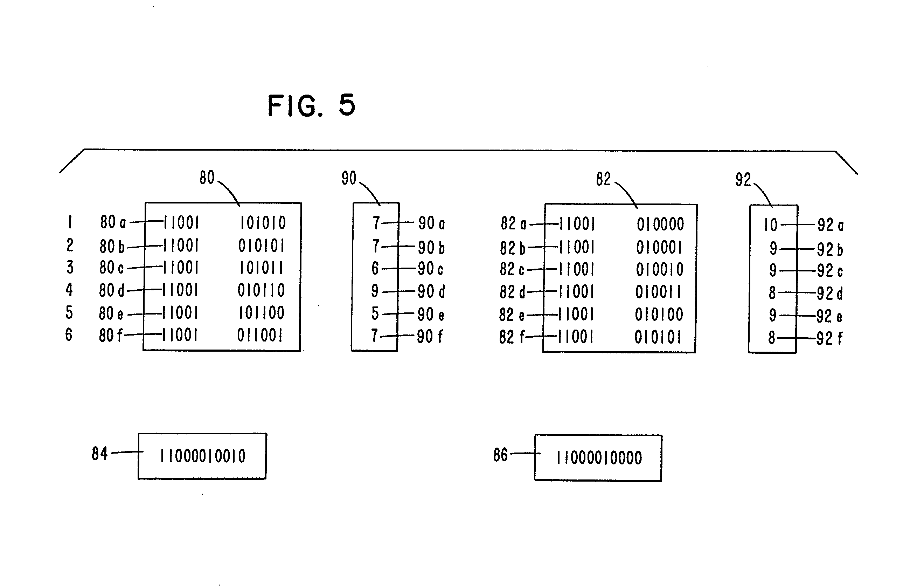

Figs. 4 and 5 illustrate several examples of the technique of the present invention.  These examples are elementary;  the purpose is merely to illustrate the technique involved.  However, the technique has been simulated with much success using 27 bit pseudo-random sequence numbers in which up to three bits had been corrupted.  The reject rate in the simulution was two DINs in 2000 attempts;  also, no misreads occurred in the simulation.  In practice, the actual overall reject rate for the complete system would be much less, due to the fact that most documents would contain only one or two corrupted bits, which would be correctable using current error correction methods.

Referring now to Fig. 4, there is shown a section of a pseudo-random sequence file 60 and a section of a simple binary sequence file 62.  For purposes of illustration, a sample DIN 64 has been read from a document by a DIN reader (similar to reader 24 in Fig.

1) from a batch corresponding to pseudo-random file 60, and DIN 64 is to be compared to file 60 for correlation. It can be seen by examining the correlation data 66, which displays the total number of bits of each DIN within the sample section of file 60 which correspond to the read DIN 64, that only one number, 60d, correlates closely with sample DIN 64, since correlation data 66d shows that all six digits of 60d match DIN 64, while the other values of correlation data 66 reflect poor correspondence.  A second sample DIN 68 is read from another document and compared to binary sequence file 62 for correlation.  By examining correlation data 70, it can be seen that there is a relatively high degree of correlation with all DINs throughout the sample file 62, making it difficult to judge the correct DIN corresponding to the sample DIN 68.

Referring now to Fig. 5, there is shown a sample from a section of a pseudo-random file 80 and a section of a simple binary file 82.  Each DIN contained in files 80 and 82 contains a non-sequential portion and a sequential portion.  A DIN 84 is read by a DIN reader (similar to reader 24 in Fig. 1), which DIN is actually a corrupted representation of DIN 80d, containing two bits in error.  A second DIN 86 is read from the simple binary file, which DIN is actually a corrupted representation of DIN 82e, also containing two bits in error.

Chart 90 shows the bit correlation data for each DIN in file 80 when compared to corrupted DIN 84. It can be seen that in pseudo-random file 80, DIN 80d correlates best with the corrupted DIN 84, when, in actuality, DIN 80d was the correct DIN read.  Chart 92 shows the bit correlation data for each DIN in file 82 when compared to corrupted DIN 86.  It can be seen that DIN 82a correlates best with the corrupted DIN 86, which is not the correct DIN read from the file.

**0073113**

CLAIMS:

1. A system for processing documents (14), including printing means (22) adapted to print coded symbols on said documents, printing control means (20, 23) coupled to said printing means (22), and reading means adapted to read the printed coded symbols and provide corresponding read-out representations, characterized in that said printing control means includes pseudo-random number generating means (23) adapted to control the printing on said documents of said coded symbols to include respective representations of pseudo-random numbers provided by said generating means (23), and further characterized by storage means (106) arranged to store representations of the pseudo-random numbers corresponding to the printed coded symbol representations of documents being processed, and comparison means (104) adapted to compare said read-out representations with a plurality of the representations stored in said storage means (106).

2. A system according to claim 1, characterized in that said coded symbols are bar coded symbols.

3. A system according to claim 1, characterized in that said comparison means is adapted to compare each read-out representation with a predetermined number of the representations stored in said storage means (106).

4. A system according to claim 1, characterized in that each said coded symbol includes a section representing information common to a plurality of said documents.

5. A system according to claim 1, characterized in that said reading means includes error detecting and correcting means (102).

6. A system according to any one of the previous claims, characterized by detecting means (18) coupled to said printing control means (20, 23) and adapted to detect the presence of a coded symbol on any of said documents (14) and to cause said printing control means (20, 23) to be effective to print a coded symbol on a document (14) only when no coded symbol is detected.

7.      A method for processing documents (14), including the steps of printing coded symbols on the documents, and reading the printed coded symbols to provide read-out representations, characterized by the steps of providing a pseudo-random number generator (23), printing said symbols to include representations of pseudo-random numbers provided by said generator (23), storing in a storage file (106) representations of the pseudo-random numbers corresponding to the printed coded symbol representations of documents (14) being processed, and comparing the read-out representations with a plurality of the representations provided in said storage file (106).

8.      A method according to claim 7, characterized in that said coded symbols are bar coded symbols.

9.      A method according to claim 7 or claim 8, characterized by the step of limiting said step of comparison to a predetermined number of the representations stored in said storage file (106).

# FIG. 1

# FIG. 2

```
                  .                              .
                  .                              .
                  .                              .
42 ──┐ 101010                      010000 ┌── 40
      010101                       010001
      101011                       010010
      010110                       010011
      101100                       010100
      011001                       010101
                  .                              .
                  .                              .
                  .                              .
```

# FIG. 4

```
┌──────────────────┐          ┌──────────────────┐
64 ─┤      010110     │          │      010001     ├─ 68
└──────────────────┘          └──────────────────┘

60 ┐            66 ┐              62 ┐            70 ┐
┌─────────┐    ┌─────────┐      ┌─────────┐    ┌─────────┐
60a─│101010 │    │ 2 ─│66a      62a─│010000 │    │ 5 ─│70a
60b─│010101 │    │ 4 ─│66b      62b─│010001 │    │ 6 ─│70b
60c─│101011 │    │ 1 ─│66c      62c─│010010 │    │ 4 ─│70c
60d─│010110 │    │ 6 ─│66d      62d─│010011 │    │ 5 ─│70d
60e─│101100 │    │ 2 ─│66e      62e─│010100 │    │ 4 ─│70e
60f─│011001 │    │ 2 ─│66f      62f─│010101 │    │ 5 ─│70f
└─────────┘    └─────────┘      └─────────┘    └─────────┘
```

# FIG. 3

# FIG. 5

| | | 80 | | 90 | | 82 | | 92 |
|---|---|---|---|---|---|---|---|---|
| 1 | 80 a | 11001  101010 | 7 — 90 a | | 82 a | 11001  010000 | 10 — 92 a | |
| 2 | 80 b | 11001  010101 | 7 — 90 b | | 82 b | 11001  010001 | 9 — 92 b | |
| 3 | 80 c | 11001  101011 | 6 — 90 c | | 82 c | 11001  010010 | 9 — 92 c | |
| 4 | 80 d | 11001  010110 | 9 — 90 d | | 82 d | 11001  010011 | 8 — 92 d | |
| 5 | 80 e | 11001  101100 | 5 — 90 e | | 82 e | 11001  010100 | 9 — 92 e | |
| 6 | 80 f | 11001  011001 | 7 — 90 f | | 82 f | 11001  010101 | 8 — 92 f | |

84 — 11000010010

86 — 11000010000

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | --- | | G 06 K 5/00 |
| A | US-A-4 013 997 (TREADWELL)  *Figure 1; abstract; column 2, line 45 to column 4, line 23* | 1,2,5-8 | G 06 K 17/00 |
| A,D | EP-A-0 032 055 (NCR CANADA LTD)  *Figure 1; page 3, line 19 to page 5, line 19* | 1,2,5-8 | |
| A | US-A-3 988 571 (BLAIR)  *Figures 1,2; abstract; column 1, line 50 to column 2, line 21* | 1-3,7,8 | |
| A | US-A-4 027 142 (PAUP)  *Figures 2,6-8; abstract; column 1, line 23 to column 2, line 21* | 1-3,7,8 | TECHNICAL FIELDS SEARCHED (Int. Cl. 3) |
| A,D | US-A-3 838 259 (KORTENHAUS)  ----- | 1 | G 06 K 5/00  G 06 K 17/00 |

The present search report has been drawn up for all claims

| Place of search THE HAGUE | Date of completion of the search 17-11-1982 | Examiner PESCHEL W. |
|---|---|---|